(19) Europäisches Patentamt
European Patent Office
Office européen des brevets

(11) **EP 1 418 195 B1**

(12) **EUROPÄISCHE PATENTSCHRIFT**

(45) Veröffentlichungstag und Bekanntmachung des Hinweises auf die Patenterteilung:
**13.06.2012 Patentblatt 2012/24**

(51) Int Cl.:
*C08J 5/18* (2006.01)    *C08J 11/06* (2006.01)

(21) Anmeldenummer: **03025089.8**

(22) Anmeldetag: **03.11.2003**

(54) **Verfahren zur Herstellung einer Thermoplastfolie unter Verwendung von Kunststoffflaschen-Recyclat**

Method of manufacturing of a thermoplastic film using recycled plastics from bottles

Méthode de fabrication d'un film thermoplastique utilisant une matière plastique de bouteilles recyclée

(84) Benannte Vertragsstaaten:
**DE FR GB IT LU**

(30) Priorität: **07.11.2002 DE 10251675**

(43) Veröffentlichungstag der Anmeldung:
**12.05.2004 Patentblatt 2004/20**

(73) Patentinhaber: **Mitsubishi Polyester Film GmbH
65203 Wiesbaden (DE)**

(72) Erfinder:
• **Kern, Ulrich Dr.
55218 Ingelheim (DE)**
• **Murschall, Ursula Dr.
55283 Nierstein (DE)**
• **Kliesch, Holger Dr.
55252 Mainz-Kastel (DE)**

(74) Vertreter: **Plate, Jürgen et al
Plate Schweitzer Zounek
Patentanwälte
Rheingaustrasse 196
65203 Wiesbaden (DE)**

(56) Entgegenhaltungen:
**EP-A- 0 483 665    EP-A- 1 344 790
US-A- 5 503 790**

EP 1 418 195 B1

**Beschreibung**

Die Erfindung betrifft ein Verfahren zur Herstellung einer ein- oder mehrschichtigen Folie durch Extrudieren oder Coextrudieren, biaxiales Orientieren und Thermofixieren auf Basis kristallisierbarer Thermoplasten, deren Hauptbestandteil ein kristallisierbarer Thermoplast mit einer Standardviskosität SV (DCE) von 600 bis 1.000 ist.

Biaxial orientierte Folien aus kristallisierbaren Thermoplasten sind bekannt und zahlreich beschrieben. Diese Folien bestehen üblicherweise hauptsächlich aus einem Polyester, bei der Herstellung anfallendem Regenerat sowie Additiven, die den einzelnen Folien die gewünschte Funktionalität verleihen. Die Rohstoffkosten für den Polyester sind jedoch relativ hoch, so daß nach preisgünstigen alternativen Ausgangsmaterialien zur Herstellung der Folien gesucht wurde.

In der EP-A 0 483 665 ist ein Verfahren zur Aufbereitung thermisch beanspruchter Polyester-Abfälle für die Wiederverwendung bei der Produktion von hochwertigen PET-Kunstoffartikeln offenbart, bei dem die Molmasse - und damit der SV-Wert - der Schmelze durch Nachkondensieren in der Schmelze oder in der Festphase erhöht wird.

Aus der US-A-5 503 790 ist ein Verfahren zur Rückführung von PET-Abfällen in die Herstellung von bruchfesten und elastischen PET-Artikein bekannt. Dabei wird amorphes thermoplastisches PET-Abfallmaterial gemahlen, mit festem Original-PET vermischt und die Mischung durch Extrusion zu Platten geformt. Aus den Platten werden dann durch einen Thermoformprozeß, beispielsweise durch Tiefziehen, die gewünschten Formkörper hergestellt. Das sind beispielsweise Getränkebecher oder andere, für den einmaligen Gebrauch bestimmte Artikel. Weil das gemahlene PET-Abfallmaterial eine verminderte intrinsische Viskosität aufweist, kann es nicht erneut in die Herstellung von PET-Flaschen eingesetzt werden.

Gegenstand der nachveröffentlichten, jedoch prioritätsälteren EP-A 1 344 790 ist eine ein- oder mehrschichtige Folie auf Basis eines kristallisierbaren Polyesters, die mindestens einen primären Stabilisator in kovalent gebundener Form enthält. Das bei der Folienherstellung immanent anfallende Regenerat kann bei der Produktion auch in größeren Mengen erneut eingesetzt werden.

Es bestand daher die Aufgabe, ein Verfahren zur Herstellung ein- oder mehrschichtiger Thermoplastfolien zur Verfügung zu stellen, das mit preiswerteren Materialien auskommt. Die danach hergestellten Folien sollen trotzdem die positiven Eigenschaften der bekannten Folien aufweisen. Dazu gehört insbesondere eine hohe Viskosität.

Gelöst wird diese Aufgabe mit einem Verfahren, bei dem ein erheblicher Anteil eines in der Flaschenindustrie als Abfall- bzw. Nebenprodukt entstehenden kristallisierbaren Thermoplasten mit einer relativ hohen Viskosität eingesetzt wird.

Gegenstand der Erfindung ist demgemäß ein Verfahren zur Herstellung einer ein- oder mehrschichtigen Folie auf Basis kristallisierbarer Thermoplasten, deren Hauptbestandteil ein kristallisierbarer Thermoplast mit einer Standardviskosität SV (Dichloressigsäure, DCE) von 600 bis 1.000 ist, durch Extrudieren oder Coextrudieren, biaxiales Orientieren und Thermofixieren, dadurch gekennzeichnet, daß der Thermoplast ein kristallisierbarer Polyester ist, der vor der Extrusion oder Coextrusion vermischt wird mit einer Mischung aus bei der Folienherstellung immanent anfallendem Regenerat und bis zu weniger als 50 Gew.-%, bezogen auf das Gesamtgewicht aller Thermoplasten, eines Sekundär-Thermoplasten mit einer Standardviskosität SV (DCE) von mehr als 900 bis 1.500, der ebenfalls ein kristallisierbarer Polyester ist, unter der Maßgabe, daß sich die Standardviskosität SV (DCE) des als Hauptbestandteil verwendeten Thermoplasten von dem des Sekundär-Thermoplasten um mindestens 100 Einheiten unterscheidet, wobei so viel von dem Sekundär-Thermoplasten zugegeben wird, daß die rechnerisch ermittelte Standardviskosität SV (DCE) der Mischung aus dem immanent anfallenden Regenerat und dem Sekundär-Thermoplasten praktisch gleich der des als Hauptbestandteil eingesetzten Thermoplasten ist, wobei die Standard-Viskosität SV (DCE) an einer 1 gew.-%igen Lösung in Dichloressigsäure (DCE) bei 25 °C gemessen wird.

Hauptbestandteil beider kristallisierbaren Thermoplasten sind in einer bevorzugten Ausführungsform Polykondensate aus aromatischen Dicarbonsäuren, speziell Terephthalsäure, Isophthalsäure und/oder Naphthalin-1,6- oder 2,6-dicarbonsäure, und aliphatischen $(C_2$-$C_{10})$Glykolen, speziell Ethylenglykol oder Cyclohexan-1,4-diyldimethanol. Das sind insbesondere Polyethylenterephthalat, Polybutylenterephthalat, Poly- (cyclohexandiyl-1,4-dimethylen-terephthalat), Poly-(ethylen-naphthalin-2,6-dicarboxylat) oder Polyethylennaphthalat/Bibenzoat. In die Polykondensate sind in der Regel 100 bis 10.000 ppm an Stabilisatoren einkondensiert.

Der auch als Original- oder Primär-Rohstoff bezeichnete kristallisierbare Thermoplast besteht vorzugsweise aus kristallisierbarem Polyester, insbesondere aus kristallisierbarem Polyethylenterephthalat, aus kristallisierbarem Polyethylennaphthalat (PEN) oder einer Mischung davon. Das thermische Abbauverhalten des Originalrohstoffs ist gegebenenfalls durch Einkondensieren von Stabilisatoren in die Polymerkette optimiert.

Unter der Bezeichnung "kristallisierbare Polyester" sollen kristallisierbare Homo- und Copolymere, kristallisierbare Compounds, kristallisierbare Recyclate und andere Variationen der kristallisierbaren Thermoplasten verstanden werden. Die Standardviskosität SV (DCE) des als Originalrohstoff verwendeten kristallisierbaren Thermoplasten beträgt im allgemeinen 600 bis 1000, bevorzugt 700 bis 980.

Die Herstellung der Polyester kann sowohl nach dem Umesterungsverfahren (DMT-Verfahren), z. B. mit Hilfe von Umesterungskatalysatoren wie Zn-, Mg-, Ca-, Mn-, Li-oder Ge-Salzen, als auch nach dem Direktesterverfahren (PTA-Verfahren) erfolgen, bei dem verschiedene Polykondensationskatalysatoren, wie Sb-, Ge-, Al- oder Ti-Verbindungen, und Phosphorverbindungen als Stabilisatoren verwendet werden, wobei Sb- und Ti-Verbindungen als Polykondensationskatalysatoren bevorzugt sind.

Die Copolyester können bis zu 50 mol-%, insbesondere bis zu 30 mol-%, an Comonomereinheiten enthalten, wobei eine Variation in der Glykol- und/oder der Säurekomponente möglich ist. Geeignete Comonomere für die Säurekomponente sind beispielsweise 4,4'-Bibenzoesäure, Adipinsäure, Glutarsäure, Bernsteinsäure, Sebazinsäure, Phthalsäure, 5-Na-sulfoisophthalsäureoderpolyfunktionelle Säuren, wie Trimellithsäure.

Der weitere kristallisierbare Thermoplast (im Folgenden auch als Sekundärrohstoff oder Sekundär-Thermoplast bezeichnet) fällt speziell in der Kunststoff-Flaschenindustrie als Neben- oder Abfallprodukt sowie als Recyclat an. Er ist preisgünstig und in großer Menge erhältlich, wurde bisher jedoch nicht zur Herstellung biaxial orientierter Folien verwendet. Die genannte Verwendung ist ebenfalls neu und Bestandteil der vorliegenden Erfindung.

Der Sekundär-Thermoplast wird in einem Anteil von bevorzugt 5 bis 45 Gew.-%, besonders bevorzugt 10 bis 40. Gew.-%, eingesetzt. Zweckmäßig ist er ebenfalls ein kristallisierbarer Polyester. Die Standardviskosität SV (DCE) des Sekundär-Thermoplasten beträgt bevorzugt 1.000 bis 1.400, besonders bevorzugt 1.050 bis 1.300. Bei einer Standardviskosität SV (DCE) von mehr als 1.500 kommt es bei der Folienherstellung häufig zur Bildung von Gelen, Stippen und zu reduzierten Filterstandzeiten. Bei Viskositäten von weniger als 900 bietet der Einsatz solcher Materialien außer dem niedrigeren Preis keine weiteren Vorteile. Der Sekundär-Thermoplast kann in Form von gemahlenen oder auf andere Weise zerkleinerten Vorformlingen oder ungebrauchten Flaschen aus der Flaschenindustrie eingesetzt werden ("Preform-Mahlgut" oder auch "Post-Industrial"-Granulat), oder aber auch in Form von bereits recycliertem Preform-Mahlgut. Nach dem Gebrauch gereinigte und gemahlene oder auf andere Weise ausreichend zerkleinerte Kunststoff-Flaschen ("Post-Consumer"-Material) eignen sich ebenfalls als Ausgangsmaterial für das erfindungsgemäßen Verfahren. All diese Materialien sind gegenüber den originalen Polyesterrohstoffen deutlich günstiger im Preis, was die Folienherstellung ökonomisch günstig gestaltet.

Bevorzugt wird der Sekundär-Thermoplast über den Regeneratkreislauf zugegeben, d.h. erwird mit dem bei der Folienherstellung (durch Randverschnitt usw.) immanent anfallenden und in die Produktion zurückgeführten Regenerat vermischt. Das Regenerat hat eine gegenüber dem Originalrohstoff verminderte Standardviskosität. Der höherviskose Sekundärrohstoff wird daher zweckmäßig in einer solchen Menge zudosiert, daß die Viskosität der Mischung praktisch der des Originalrohstoffs entspricht.

Der Sekundärrohstoff sollte einen Copolyestergehalt von weniger als 10 Gew.-% aufweisen. Höhere Copolyester-Gehalte können sich störend auf die Folienproduktion auswirken und/oder die Folieneigenschaften negativ beeinflussen. Des weiteren sollte er keine Farbadditive oder Pigmente enthalten, da sich diese störend auf die Herstellung von transparenten und eingefärbten Folien auswirken.

Die aus diesen Rohstoffen hergestellte Polyesterfolie kann ein- oder mehrschichtig sein. In der mehrschichtigen Ausführungsform ist sie aus mindestens einer Kernschicht und mindestens einer Deckschicht aufgebaut, wobei insbesondere ein dreischichtiger A-B-A oder A-B-C Aufbau bevorzugt ist. Die erfindungsgemäß hergestellten Folien können symmetrisch oder asymmetrisch aufgebaut sein, wobei verschiedene, gegebenenfalls auch mit zusätzlichen Additiven ausgestattete, Polyester oder solche gleicher chemischer Zusammensetzung, jedoch mit unterschiedlichem Molekulargewicht und verschiedener Viskosität durch Coextrusion vereinigt werden können.

In der mehrschichtigen Ausführungsform besteht die Kernschicht bevorzugt aus einer Mischung des Originalrohstoffs, Regenerat und Sekundärrohstoff oder aus einer Mischung aus Originalrohstoff und Regenerat, wobei das Regenerat aus einer Mischung aus inhärent angefallenem Folienverschnitt und Sekundärrohstoff hergestellt wurde. Die Deckschichten der mehrschichtigen Folie können beispielsweise aus Polyethylenterephthalat-Homopolymeren, aus Polyethylen- naphthalat-Homopolymeren oder aus Polyethylenterephthalat-Polyethylennaphthalat Copolymeren oder Compounds bestehen.

Basisschicht und/oder Deckschicht(en) können zusätzlich weitere übliche Additive, wie Antiblockmittel, lösliche Farbstoffe, Weiß- und/oder Buntpigmente enthalten. Sie werden zweckmäßig dem Polymer bzw. der Polymermischung bereits vor dem Aufschmelzen zugesetzt.

Als Additive können auch Mischungen von zwei und mehr verschiedenen Antiblockmitteln oder Mischungen von Antiblockmitteln gleicher Zusammensetzung, aber unterschiedlicher Partikelgröße gewählt werden. Die Partikel können den einzelnen Schichten in den üblichen Konzentrationen, z.B. als glykolische Dispersion, während der Polykondensation oder über Masterbatche bei der Extrusion zugegeben werden. Als besonders geeignet haben sich Pigmentanteile von 0,0001 bis 10,0 Gew.-%, bezogen auf das Gewicht der Schichten, erwiesen.

Die Folie kann weiterhin durch Zugabe von geeigneten Zusatzstoffen UV-stabilisiert, flammhemmend ausgerüstet, siegelfähig, ein- oder beidseitig beschichtet, hydrolysestabilisiert, mit Antioxidantien ausgerüstet, chemisch vorbehandelt, coronabehandelt und/oder flammbehandelt sein.

In einer besonderen Ausführungsform wird bei der Herstellung der Folie mindestens ein anorganisches Weißpigment und/oder mindestens ein anorganisches Buntpigment zugegeben, das dann Bestandteil der Basisschicht und/oder gegebenenfalls der Deckschicht wird. Das anorganische Pigment wird bevorzugt über Masterbatch-Technologie zudosiert, kann aber auch direkt beim Rohstoffhersteller eingearbeitet werden. Der Anteil des anorganischen Pigmentes beträgt allgemein 0,2 bis 40 Gew.-%, bevorzugt 0,3 bis 25 Gew.-%, jeweils bezogen auf das Gewicht des Thermoplasten der damit ausgerüsteten Schicht.

Geeignete Weißpigmente sind vorzugsweise Titandioxid, Bariumsulfat, Calciumcarbonat, Kaolin, Siliciumdioxid, wobei Titandioxid (Anatas oder Rutil) und Bariumsulfat bevorzugt sind.

Durch Titandioxid der beschriebenen Art entstehen innerhalb der Polymermatrix keine Vakuolen während der Folienherstellung.

Die gegebenenfalls verwendeten Titandioxidteilchen können einen Überzug aus anorganischen Oxiden besitzen, wie er üblicherweise als Überzug für $TiO_2$-Weißpigment in Papieren oder Anstrichmitteln zurVerbesserung der Lichtechtheit eingesetzt wird.

$TiO_2$ ist bekanntlich photoaktiv. Bei Einwirkung von UV-Strahlen bilden sich freie Radikale auf der Oberfläche der Partikel. Diese freien Radikale können zu den filmbildenden Polymeren wandern, was zu Abbaureaktionen und Vergilbung führt. Zu den besonders geeigneten Oxiden gehören die Oxide von Aluminium, Silicium, Zink oder Magnesium oder Mischungen aus zwei oder mehreren dieser Verbindungen. $TiO_2$ Partikel mit einem Überzug aus mehreren dieser Verbindungen werden z. B. in der EP-A 0 044 515 und EP-A 0 078 633 beschrieben. Weiterhin kann der Überzug organischeverbindungen mit polaren und unpolaren Gruppen enthalten. Die organischen Verbindungen müssen bei der Herstellung der Folie durch Extrusion der Polymerschmelze ausreichend thermostabil sein.

Polare Gruppen sind beispielsweise -OH; -OR; -COOX; (X = R; H oder Na, R = $(C_1-C_{34})$Alkyl). Bevorzugte organische Verbindungen sind Alkanole und Fettsäuren mit 8 bis 30 C-Atomen im Alkylteil, insbesondere Fettsäuren und primäre n-Alkanole mit 12 bis 24 C-Atomen, sowie Polydiorganosiloxane und/oder Polyorganohydrogensiloxane, wie Polydimethylsiloxan und Polymethylhydrogensiloxan.

Der Überzug aus Titandioxidteilchen besteht gewöhnlich aus 1 bis 12 g, insbesondere 2 bis 6 g, anorganischen Oxiden und 0,5 bis 3 g, insbesondere 0,7 bis 1,5 g, organischen Verbindungen, jeweils bezogen auf 100 g Titandioxidteilchen. Der Überzug wird auf die Teilchen in wäßriger Suspension aufgebracht. Die anorganischen Oxide werden aus wasserlöslichen Verbindungen, z. B. Alkali-, insbesondere Natriumnitrat, Natriumsilikat (Wasserglas) oder Kieselsäure in der wäßrigen Suspension ausgefällt.

Unter anorganischen Oxiden wie $Al_2O_3$ oder $SiO_2$ sind auch die Hydroxide oder deren verschiedenen Entwässerungsstufen wie z. B. Oxidhydrat zu verstehen, ohne daß man deren genaue Zusammensetzung und Struktur erkennt. Auf das $TiO_2$-Pigment werden nach dem Glühen und Mahlen in wäßriger Suspension die Oxidhydrate z. B. des Aluminiums und/oder Silicium gefällt, die Pigmente dann gewaschen und getrocknet. Diese Ausfällung kann somit direkt in einer Suspension geschehen, wie sie im Herstellungsprozeß nach der Glühung und der sich anschließenden Naßmahlung anfällt. Die Ausfällung der Oxide und/oder Oxidhydrate der jeweiligen Metalle erfolgt aus den wasserlöslichen Metallsalzen im bekannten pH-Bereich, fürdas Aluminium wird beispielsweise Aluminiumsulfat in wäßriger Lösung (pH kleiner 4) eingesetzt und durch Zugabe von wäßriger Ammoniaklösung oder Natronlauge im pH-Bereich zwischen 5 und 9, vorzugsweise zwischen 7 und 8,5, das Oxidhydrat gefällt. Geht man von einer Wasserglas- oder Alkalialuminatlösung aus, sollte der pH-Wert der vorgelegten $TiO_2$-Suspension im stark alkalischen Bereich (pH größer 8) liegen. Die Ausfällung erfolgt dann durch Zugabe von Mineralsäure wie Schwefelsäure im pH-Bereich 5 bis 8. Nach der Ausfällung der Metalloxide wird die Suspension noch 15 min bis etwa 2 Stunden gerührt, wobei die ausgefällten Schichten eine Alterung erfahren. Das beschichtete Produkt wird von der wäßrigen Dispersion abgetrennt und nach dem Waschen bei erhöhter Temperatur, insbesondere bei 70 bis 100 °C, getrocknet.

In einer anderen Ausführungsform ist Bariumsulfat als Pigment bevorzugt, wobei die Konzentration des Pigmentes vorzugsweise zwischen 0,2 Gew.-% und 40 Gew.-%, insbesondere zwischen 0,3 Gew.-% und 25 Gew.-%, bezogen auf das Gewicht des kristallisierbaren Thermoplasten, liegt. Vorzugsweise wird auch das Bariumsulfat über die sogenannte Masterbatch-Technologie direkt bei der Folienherstellung zudosiert.

Im Falle einer Pigmentierung mit Bariumsulfat enthält die Folie zusätzlich mindestens einen optischen Aufheller, der in einem Anteil von 10 ppm bis 50.000 ppm, bevorzugt von 20 ppm bis 30.000 ppm, besonders bevorzugt von 50 ppm bis 25.000 ppm, jeweils bezogen auf das Gewicht des kristallisierbaren Thermoplasten, eingesetzt wird. Vorzugsweise wird er über die sogenannte Masterbatch-Technologie direkt bei der Folienherstellung zudosiert. Geeignet sind Benzoxazol Derivate, Triazine, Phenylcumarine und Bis-styrylbiphenyle. Bevorzugt werden ®Tinopal (Ciba-Geigy, Basel, Schweiz), ®Hostalux KS (Clariant, Deutschland) sowie ®Eastobrite OB-1 (Eastman) verwendet. Der optische Aufheller ist in der Lage, UV-Strahlen im Bereich von 360 bis 380 nm zu absorbieren und als längerwelliges, sichtbares blauviolettes Licht wieder abzugeben.

Neben dem optischen Aufheller können auch noch lösliche blaue Farbstoffe zugesetzt werden. Für diesen Zweck sind Ultramarinblau und Anthrachinonfarbstoffe, insbesondere Sudanblau 2 (BASF, Ludwigshafen, Bundesrepublik Deutschland), geeignet. Die blauen Farbstoffe werden in einem Anteil von 10 ppm bis 10.000 ppm, bevorzugt von 20 ppm bis 5.000 ppm, besonders bevorzugt 50 ppm bis 1.000 ppm, jeweils bezogen auf das Gewicht des kristallisierbaren Thermoplasten, eingesetzt.

In einer bevorzugten Ausführungsform werden gefällte Bariumsulfat-Typen eingesetzt. Gefälltes Bariumsulfat erhält man aus Bariumsalzen und Sulfaten oder Schwefelsäure als feinteiliges farbloses Pulver, dessen Korngröße durch die Fällungsbedingungen zu steuern ist. Gefällte Bariumsulfate können nach den üblichen Verfahren, die in Kunststoff-Journal 8, Nr. 10, 30-36 und Nr. 11, 36-31 (1974) beschrieben sind, hergestellt werden. Der Anteil an Bariumsulfat beträgt zweckmäßigerweise 0,2 bis 40 Gew.-%, bevorzugt 0,3 bis 25 Gew.-%, besonders bevorzugt 1 bis 25 Gew.-%, jeweils bezogen auf das Gewicht des Thermoplasten. Die mittlere Teilchengröße ist relativ klein und liegt vorzugsweise im Bereich von 0,1 bis 5 $\mu$m, besonders bevorzugt im Bereich von 0,2 bis 3 $\mu$m. Die Dichte des verwendeten Bariumsulfates liegt zwischen 4 und 5 g/cm$^3$.

In einer besonders bevorzugten Ausführungsform enthält die erfindungsgemäß hergestellte Folie als Hauptbestandteil ein kristallisierbares Polyethylenterephthalat sowie 1 Gew.-% bis 25 Gew.-% gefälltes Bariumsulfat, zweckmäßigerweise mit einem Teilchendurchmesser von 0,4 bis 1 $\mu$m, wobei Blanc fixe XR-HX oder Blanc fixe HXH von der Firma Sachtleben Chemie besonders bevorzugt wird.

Des weiteren enthält die erfindungsgemäß hergestellte Folie vorzugsweise 10 bis 50.000 ppm eines optischen Aufhellers, der in dem kristallisierbaren Thermoplasten löslich ist, wobei Triazin-phenylcumarin (®Tinopal, Ciba-Geigy, Basel, Schweiz), ®Hostalux KS sowie ®Eastobrite OB-1 (Eastman) besonders bevorzugt sind.

In einer weiteren Ausführungsform kann die erfindungsgemäß hergestellte Folie auch bunt eingefärbt sein. Die Folie dieser Ausführungsform kann in der Basis und/oder den Deckschichten ein anorganisches Farbpigment, anorganische Schwarzpigmente sowie anorganische oderorganische Buntpigmente enthalten. Das Pigment wird bevorzugt über die Masterbatch-Technologie zudosiert, kann aber auch direkt beim Rohstoffhersteller eingearbeitet werden. Der Anteil an Pigment beträgt allgemein 0,2 bis 40 Gew.-%, bevorzugt 0,3 bis 25 Gew.-%, jeweils bezogen auf das Gewicht des kristallisierbaren Thermoplasten.

Typische anorganische Schwarzpigmente sind Rußmodifikationen, die auch gecoatet sein können, Kohlenstoffpigmente, die sich von den Rußpigmenten durch einen höheren Aschegehalt unterscheiden, und oxidische Schwarzpigmente wie Eisenoxidschwarz und Kupfer-, Chrom-oder Eisenoxid-Mischungen (Mischphasenpigmente).

Geeignete anorganische Buntpigmente sind oxidische Buntpigmente, hydroxylhaltige Pigmente, sulfidische Pigmente und Chromate. Beispiele für oxidische Buntpigmente sind Eisenoxidrot, Titanoxid-Nickeloxid-Antimonoxid-Mischphasen-pigmente, Titandioxid-Chromoxid, Antimonoxid-Mischphasen-Pigmente, Mischungen der Oxide von Eisen, Zink und Titan, Chromoxid Eisenoxidbraun, Spinelle des Systems Kobalt-Aluminium-Titan-Nickel-Zinkoxid und Mischphasenpigmente auf Basis von anderen Metalloxiden. Typische hydroxylhaltige Pigmente sind beispielsweise Oxid-Hydroxide des dreiwertigen Eisens, wie FeOOH. Beispiele für sulfidische Pigmente sind Cadmium-Sulfid-Selenide, Cadmium-Zinksulfide, Natrium-Aluminium-Silikat mit polysulfidartig gebundenem Schwefel im Gitter. Beispiele für Chromate sind Bleichromate, die in den Kristallformen monoklin, rhombisch und tetragonal vorliegen können. Alle Buntpigmente können wie die Weiß- und Schwarzpigmente sowohl ungecoated als auch anorganisch und/oder organisch gecoatet vorliegen.

Die organischen Buntpigmente teilt man in der Regel in Azopigmente und sogenannte Nicht-Azopigmente auf. Charakteristisch für die Azopigmente ist die Azo (-N=N-)-Gruppe. Azopigmente können Monoazopigmente, Diazopigmente, Diazokondensationspigmente, Salze von Azofarbsäuren und Mischungen aus den Azopigmenten sein.

In einer weiteren Ausführungsform ist die Folie so eingefärbt, daß sie transparent ist. Dazu wird allgemein ein in dem Thermoplasten löslicher Farbstoff verwendet. Die Löslichkeit des Farbstoffs wird dabei gemäß der DIN 55 949 bestimmt. Sein Anteil liegt zweckmäßig bei 0,01 bis 20,0 Gew.-%, bevorzugt 0,05 bis 10,0 Gew.-%, jeweils bezogen auf das Gewicht des kristallisierbaren Thermoplasten. Die transparente Färbung der Folie ist auf eine wellenlängenabhängige Absorption des Lichts durch den im Thermoplasten molekular gelösten Farbstoff zurückzuführen. Besonders geeignet sind fett- oder aromatenlösliche Farbstoffe, beispielsweise Azo- oder Anthrachinonfarbstoffe. Sie eignen sich speziell zur Einfärbung von PET, da durch dessen hohe Glas-Übergangstemperatur Tg die Migration des Farbstoffs eingeschränkt ist. Geeignete lösliche Farbstoffe sind weiterhin C.I. Solventgelb 93 (ein Pyrazolonderivat), C.I. Solventgelb 16 (ein fettlöslicher Azofarbstoff), Fluorolgrüngold (ein fluoreszierender polycyclischer Farbstoff), C.I. Solventrot 1 (ein Azofarbstoff), Azofarbstoffe wie Thermoplastrot BS, Sudanrot BB, C.I. Solventrot 138 (ein Anthrachinonderivat), fluoreszierende Benzopyranfarbstoffe, wie Fluorolrot GK und Fluorolorange GK, C.I. Solventblau 35 (ein Anthrachinonfarbstoff), C.I. Solventblau 15:1 (ein Phthalocyaninfarbstoff) sowie Mischungen davon. Die Einfärbung mit den löslichen Farbstoffen wird als transparent, durchscheinend oder transluzent bezeichnet.

Der lösliche Farbstoff wird bevorzugt über die Masterbatch-Technologie bei der Folienherstellung zudosiert, kann aber auch bereits während der Rohstoffherstellung eingearbeitet werden. Der Anteil der löslichen Farbstoffe beträgt allgemein 0,01 bis 40,0 Gew.-%, bevorzugt 0,05 bis 25,O Gew.-%, jeweils bezogen auf das Gewicht des kristallisierbaren Thermoplasten.

Bedingt durch die Trocknung der eingesetzten Polymere und den Extrusionsprozeß erfolgt ein Viskositätsabbau des Polymers. Die Viskosität des beim Produktionsprozeß eingesetzten Regenerates, das aus inhärent angefallenem Folienverschnitt in einem nachfolgenden Extrusionsschritt erzeugt wird, ist durch den zusätzlichen Extrusionsschritt naturgemäß niedriger als die Viskosität des eingesetzten Originalrohstoffs.

Beim nachfolgenden Wiedereinsatz kann es dadurch zu Viskositätsschwankungen kommen, die die Prozeßstabilität reduzieren. Das wird beim erfindungsgemäßen Verfahren dadurch verhindert, daß dem Folienverschnitt im Regenerierungsprozeß genau die Menge an hochviskosem Sekundär-Thermoplast zugegeben wird, die nötig ist, um die Viskosität wieder auf das Ausgangsniveau zu heben. Wird diese Menge dem Regeneratkreislauf zugesetzt, kann der optimale Anteil des zweiten Thermoplasten anhand folgender Formel einfach berechnet werden:

$$\text{Sekundär-Thermoplast} = ((SV_{OR} + \Delta_R - SV_{VER}) / (SV_{FL} - SV_{VER})) * 100,$$

wobei

$SV_{OR}$ = mittlerer SV-Wert aller Rohstoffe gemäß Originalrohstoff
$\Delta_R$ = SV-Wert-Abbau durch Extrusionsschritt beim Regenerieren
$SV_{VER}$ = SV-Wert des eingesetzten Verschnitts bzw. SV-Wert der hergestellten Folie
$SV_{FL}$ = SV-Wert des Sekundär-Thermoplasten

bedeuten. Durch die Verwendung einer kostengünstigen hochviskosen Rohstoffkomponente ist es darüber hinaus möglich, den Regeneratanteil bei der Herstellung auch solcher Folien deutlich zu erhöhen, bei denen bedingt durch den hohen Viskositätsabbau bei der Verarbeitung der Regeneratanteil sonst begrenzt ist.

Überraschenderweise kann der Sekundär-Thermoplast in einem Anteil von bis zu weniger als 50 Gew.-%, bezogen auf das Gesamtgewicht aller Thermoplaste, eingesetzt werden, ohne daß Gelbildung eintritt oder daß Stippen oder sonstige Oberflächendefekte auftreten. Ebenso überraschend bleiben auch die Filterstandzeiten gegenüber konventionellen Folienrezepturen unbeeinflußt.

Die Folie läßt sich bei ihrer Herstellung sowohl in Längs- als auch in Querrichtung hervorragend und ohne Abrisse orientieren. Die orientierte (= verstreckte) Folie hat allgemein eine Dicke von 0,9 bis 500 $\mu$m, bevorzugt von 5 bis 350 $\mu$m, besonders bevorzugt von 10 bis 300 $\mu$m.

Beim Einsatz des Sekundär-Thermoplasten in einem Anteil von 20 bis zu weniger als 50 Gew.-% können sich die mechanischen Eigenschaften zunächst verschlechtern. Durch Anpassung der Verfahrensparameter, insbesondere der Streckverhältnisse und der Strecktemperaturen, können die gewünschten Eigenschaften jedoch wieder hergestellt werden.

So zählen zu den guten mechanischen Eigenschaften unter anderem ein hoher E-Modul (in Längsrichtung = Maschinenrichtung (MD) größer als 3.200 N/mm², bevorzugt größer als 3.500 N/mm²; in Querrichtung (TD) größer als 3.500 N/mm², bevorzugt größer als 3.800 N/mm²; jeweils bestimmt gemäß ISO 527-1-2), sowie gute Reißfestigkeitswerte (in MD mehr als 100 N/mm²; in TD mehr als 130 N/mm²).

Der Sekundär-Thermoplast enthält oftmals einen gewissen Prozentsatz an Isophthalsäure (IPA), wodurch die Dauerwärmebeständigkeit der PET-Folie negativ beeinflußt werden kann. Für Folien, die eine hohe Dauerwärmebeständigkeit aufweisen müssen, ist der Einsatz von 2 bis maximal 25 Gew.-% an IPA-haltigem Sekundär-Thermoplast sinnvoll.

Des weiteren war es mehr als überraschend, daß die hergestellten Folien sich ohne zusätzliche Additive hervorragend thermoformen lassen. Thermoformbarkeit bedeutet, daß sich die Folie auf handelsüblichen Tiefziehmaschinen ohne unwirtschaftliches Vortrocknen zu komplexen und großflächigen Formkörpern tiefziehen bzw. thermoformen läßt.

Die Polyesterfolien können nach bekannten Verfahren, gegebenenfalls mit weiteren Rohstoffen und/oder weiteren üblichen Additiven in üblichen Mengen (0,1 bis 30 Gew.-%, bezogen auf das Gewicht der Folie) sowohl als ein- oder mehrschichtige, gegebenenfalls coextrudierte Folien mit gleichen oder unterschiedlich ausgebildeten Oberflächen hergestellt werden, wobei eine Oberfläche beispielsweise Partikel enthält und die andere nicht oder alle Schichten Partikel enthalten. Ebenso kann/können eine oder beide Oberflächen der Folie nach bekannten Verfahren mit einer funktionalen Beschichtung versehen werden.

Der Sekundär-Thermoplast sollte, wie auch der Originalrohstoff, vorkristallisiert oder vorgetrocknet sein. Diese Vortrocknung umfaßt ein gradielles Erhitzen bevorzugt unter reduziertem Druck (20 bis 80 mbar, vorzugsweise 30 bis 60 mbar, insbesondere 40 bis 50 mbar) und unter Rühren und gegebenenfalls ein Nachtrocknen bei konstanter, erhöhter Temperatur ebenfalls bevorzugt unter reduziertem Druck. Die Polymere werden vorzugsweise bei Raumtemperatur aus einem Dosierbehälter in der gewünschten Abmischung mit gegebenenfalls anderen Rohstoffkomponenten chargenweise in einen Vakuumtrockner gefüllt, der im Laufe der Trocken- bzw. Verweilzeit ein Temperaturspektrum von 10°C bis 160°C, vorzugsweise 20 °C bis 150 °C, insbesondere 30 °C bis 130 °C durchläuft. Während der ca. sechs-, vorzugsweise fünf-, insbesondere vierstündigen Verweilzeit wird die Rohstoffmischung mit 10 bis 70 Upm, vorzugsweise 15 bis 65 Upm, insbesondere 20 bis 60 Upm gerührt. Das so vorkristallisierte bzw. vorgetrocknete Rohstoffgemisch wird in einem nachgeschalteten, ebenfalls evakuierten Behälter bei 90°C bis 180 °C, vorzugsweise 100°C bis 170°C, insbesondere 110 °C bis 160 °C für 2 bis 8 Stunden, vorzugsweise 2 bis 7 Stunden, insbesondere 4 bis 6 Stunden nachgetrocknet.

Bei dem bevorzugtem Extrusionsverfahren zur Herstellung der Folie wird das aufgeschmolzene Polymermaterial mit den Additiven durch eine Schlitzdüse extrudiert und als weitgehend amorphe Vorfolie auf einer Kühlwalze abgeschreckt. Diese Folie wird anschließend erneut erhitzt und in Längs- und Querrichtung bzw. in Quer- und Längsrichtung bzw. in Längs-, in Quer- und nochmals und Längsrichtung und/oder Querrichtung gestreckt. Die Strecktemperaturen liegen im allgemeinen bei $T_G$ + 10 °C bis $T_G$ + 60 °C ($T_G$ = Glastemperatur der Folie), das Streckverhältnis der Längsstreckung liegt üblicherweise bei 2 bis 6, insbesondere bei 3 bis 4,5, das der Querstreckung bei 2 bis 5, insbesondere bei 3 bis 4,5 und das der ggf. durchgeführten zweiten Längs- und Querstreckung bei 1,1 bis 5. Die erste Längsstreckung kann gegebenenfalls gleichzeitig mit der Querstreckung (Simultanstreckung) durchgeführt werden. Anschließend folgt die Thermofixierung der Folie bei Ofentemperaturen von 180 bis 260 °C, insbesondere bei 220 bis 250 °C. Anschließend wird die Folie abgekühlt und gewickelt.

Es war überraschend, daß durch die Vortrocknung bzw. Vorkristallisation eine Folie mit dem geforderten Eigenschaftsprofil wirtschaftlich und ohne Verklebung im Trockner hergestellt werden konnte. Auch der Gelbwert der Folie war im Vergleich zu einer konventionell hergestellten Folie im Rahmen der Meßgenauigkeit nicht negativ beeinflußt.

Des weiteren war überraschend, daß auch das Regenerat wieder einsetzbar ist, ohne den Gelbwert der Folie negativ zu beeinflussen.

Durch die Kombination ausgezeichneter Eigenschaften eignet sich die erfindungsgemäß hergestellte Folie hervorragend für eine Vielzahl verschiedener Anwendungen, beispielsweise für Kabel- und Motorisolation, Thermotransferfolien, Innenraumverkleidungen, Messebau und Messeartikel, als Displays, für Schilder, Schutzverglasungen von Maschinen und Fahrzeugen, im Beleuchtungssektor, im Laden- und Regalbau, als Werbeartikel oder Kaschiermedium und vieles mehr.

Sofern die eingesetzten Materialien den gültigen gesetzlichen Vorgaben entsprechen, können die daraus hergestellten Folien auch als Verpackungsmaterial sogar im Lebensmittelbereich eingesetzt werden.

All die genannten Folien sind ohne Umweltbelastung problemlos recycelbar.

Die Messungen der einzelnen Eigenschaften erfolgen dabei gemäß der folgenden Normen bzw.Verfahren:

**Gelbwert**

Der Gelbwert (YID) ist die Abweichung von der Farblosigkeit in Richtung "Gelb" und wurde gemäß DIN 6167 gemessen.

**Lichttransmission (Transparenz)**

Unter der Lichttransmission ist das Verhältnis des insgesamt durchgelassenen Lichtes zur einfallenden Lichtmenge zu verstehen.

**Trübung**

Trübung ist der prozentuale Anteil des durchgelassenen Lichtes, der vom eingestrahlten Lichtbündel im Mittel um mehr als 2,5° abweicht. Die Bildschärfe wurde unter einem Winkel kleiner 2,5° ermittelt.

Lichttransmission und Trübung wurden mit dem Messgerät "®HAZEGARD plus" (Fa. Byk Gardener, Deutschland) nach ASTM D 1003 gemessen.

**Oberflächendefekte**

Die Oberflächendefekte wurden visuell bestimmt.

**Dauerwärmebeständigkeit**

Die Messung der Dauerwärmebeständigkeit erfolgte in Anlehnung an IEC216.

Anstelle der in der Norm empfohlenen Verwendung der Reißkraft wurde hier 2% Bruchdehnung als Versagenskriterium gewählt. Die gewählten Temperaturen zur Temperung waren 150°C,160°C,170°C und 180°C.

**Mechanische Eigenschaften**

Der E-Modul und die Reißfestigkeit wurden in Längs- und Querrichtung nach ISO 527-1-2 gemessen.

**Standardviskosität (SV) und intrinsische Viskosität (IV):**

Die Standardviskosität SV wurde - angelehnt an DIN 53726 - als 1gew.%ige Lösung in Dichloressigsäure (DCE) bei 25 °C gemessen. SV (DCE) = ($\eta_{rel}$ -1) x 1000. Die intrinsische Viskosität (IV) berechnete sich wie folgt aus der Standardviskosität

$$IV\ (DCE) = 6{,}67 \times 10^{-4}\ SV\ (DCE) + 0{,}118$$

**Beispiele**

Die Erfindung wird nachfolgend anhand von Beispielen und Vergleichsbeispielen näher erläutert. Beschrieben wird darin die Herstellung von ein- oder mehrschichtigen Folien unterschiedlicher Dicke in einer Extrusionsstraße. Prozente sind Gewichtsprozente, soweit nicht anders angegeben oder aus dem Zusammenhang offensichtlich.

Beispiel 1

Es wurde eine 190 $\mu$m dicke weiße Monofolie hergestellt aus:

| | |
|---|---|
| 34% | M04 (PET-Klarrohstoff der Firma KoSa, Deutschland mit einem SV-Wert von 980), |
| 6% | Masterbatch, das neben PET 4 Gew.-% Titandioxid sowie 3 Gew.-% Calciumcarbonat enthält und das einen SV-Wert von 810 aufwies, |
| 60% | Regenerat, das aus 60% inhärent angefallenem Folienverschnitt sowie 40% Flaschenrecyclat (Post-Industrial, PET-A, Fa. Texplast, Deutschland) mit einem SV-Wert von 1.200 bestand. |

Der eingesetzte Folienverschnitt hatte einen SV-Wert von 850, wodurch sich für das eingesetzte Material vor dem Regenerieren ein errechneter Mischungs-SV-Wert von 990 ergab. Durch den Extrusionsschritt beim Regenerieren reduzierte sich der SV-Wert der Mischung um 40 Einheiten auf einen SV-Wert von 950, womit der SV-Wert des Regenerates in etwa den gleichen SV-Wert aufwies wie die Summe der Originalrohstoffe.
Die gemäß dieser Rezeptur hergestellte Folie hatte einen SV-Wert von etwa 850.
Die Gesamtausbeute bei der Herstellung dieser Folie (= Anteil verkaufsfähiger Folie zu eingesetztem Extrudat) betrug 64%, d.h. 36% des Extrudates fielen wieder als Verschnitt an. Unter diesen Bedingungen war der Rohstoffkreislauf geschlossen (60% Regenerat mit 60% Verschnittanteil entspricht einem gesamten Verschnittanteil von 36%).

Beispiel 2

Es wurde eine 4,5 $\mu$m dicke Monofolie hergestellt aus:

| | |
|---|---|
| 20% | RT49 (PET-Klarrohstoff der Firma KoSa, Deutschland mit einem SV- Wert von 810), |
| 10% | Masterbatch mit einem SV-Wert von 810, das neben PET 1 % Siliciumdioxid (Sylobloc, Fa. Grace, Deutschland) enthielt, sowie |
| 70% | Regenerat, das aus 82% inhärent angefallenem Folienverschnitt sowie 18% Flaschenrecyclat (Post-Industrial, PET-A, Fa. Texplast, Deutschland) mit einem SV-Wert von1.200 bestand. |

Der eingesetzte Folienverschnitt hatte einen SV-Wert von 750, woraus sich für das eingesetzte Material vor dem Regenerieren ein errechneter Mischungs-SV-Wert von 831 ergab. Durch den Extrusionsschritt beim Regenerieren reduzierte sich dieser Mischungs-SV-Wert um etwa 20 Einheiten auf einen SV-Wert von 810, womit der SV-Wert des Regenerates in etwa den gleichen SV-Wert aufwies wie die Summe der Originalrohstoffe.

Beispiel 3

Es wurde eine 12 $\mu$m dicke ABA-Folie wie folgt hergestellt:
Deckschichten je 1 $\mu$m dick):

90% RT49 (PET-Klarrohstoffder Firma KoSa, Deutschland mit einem SV- Wert von 810)

10% Masterbatch mit einem SV-Wert von 810, das neben PET 1% Siliciumdioxid (Sylobloc, Fa. Grace, Deutschland) enthielt.

Basisschicht (10 μm dick):

40% RT49 (PET-Klarrohstoff der Firma KoSa, Deutschland mit einem SV- Wert von 810) und

60% Regenerat, das aus 86% inhärent angefallenem Folienverschnitt sowie 14% Flaschenrecyclat (Post-Industrial, PET-A, Fa. Texplast, Deutschland) mit einem SV-Wert von 1.200 bestand.

Der eingesetzte Folienverschnitt hatte einen SV-Wert von 770, wodurch sich für das eingesetzte Material vor dem Regenerieren ein errechneter Mischungs-SV-Wert von 830 ergab. Durch den Extrusionsschritt beim Regenerieren reduzierte sich dieser Mischungs-SV-Wert um etwa 20 Einheiten auf einen SV-Wert von 810, womit der SV-Wert des Regenerates in etwa den gleichen SV-Wert auf wies wie die Summe der Originalrohstoffe.

Beispiel 4

Analog Beispiel 2 wurde eine 4,5 μm dicke Monofolie hergestellt aus:

20% RT49 (PET-Klarrohstoff der Firma KoSa, Deutschland mit einem SV- Wert von 810),

10% Masterbatch mit einem SV-Wert von 810, das neben PET 1 Gew.-% Siliciumdioxid (Sylobloc, Fa. Grace, Deutschland) enthielt,

57% Regenerat, das aus inhärent angefallenemfolienverschnitt hergestellt wurde, sowie

13% Flaschenrecyclat (Post-Industrial, PET-A, Fa. Texplast, Deutschland) mit einem SV-Wert von 1.200.

Auch in diesem Beispiel wurde Flaschenrecyklat zur Erhöhung des SV-Wertes zudosiert, hier jedoch nicht über den Regeneratkreislauf. Die Homogenität der Polymerschmelze war dadurch etwas vermindert. Diese Ausführungsform ist daher weniger bevorzugt.

Vergleichsbeispiel 1

Beispiel 1 wurde wiederholt, nun jedoch ohne den Einsatz von Flaschenrecyklat. Um einen SV-Wert der Folie von 850 bei sonst gleichen Eigenschaften zu erreichen, war folgende Rezeptur erforderlich:

81 % M04 (PET-Klarrohstoff der Firma KoSa, Deutschland mit einem SV- Wert von 980),

9% Masterbatch, das neben PET 4 Gew.-% Titandioxid sowie 3 Gew.-% Calciumcarbonat enthielt und das einen SV-Wert von 810 aufwies sowie

10% Regenerat, das aus inhärent angefallenem Folienverschnitt bestand.

Der Mischungs-SV der Rezeptur betrug analog zu Beispiel 1 etwa 950. Der SV-Wert-Abbau während der Trocknung und der Extrusion zur Folienherstellung betrug ca. 100 SV-Wert Einheiten, so daß der SV-Wert der Folie bei 850 lag.

Die Viskosität von Originalrohstoff, Masterbatch und Regenerat war sehr unterschiedlich, was die Homogenität der Polymerschmelze drastisch verschlechterte.

Bei einer Gesamtausbeute von 64% bei der Folienherstellung konnte hier lediglich 10% Folienverschnitt zurückgeführt werden, was die Folienherstellung unwirtschaftlich machte.

Die Eigenschaften der Folien sind in der nachfolgenden Tabelle dargestellt:

**Tabelle**

| Eigenschaften | | B1 | B2 | B3 | B4 | VB1 |
|---|---|---|---|---|---|---|
| Dicke | [μm] | 190 | 4,5 | 12 | 4,5 | 190 |
| Gelbzahl | | 17 | 1,2 | 1,2 | 1,2 | 17 |

(fortgesetzt)

| Eigenschaften | | | | B1 | B2 | B3 | B4 | VB1 |
|---|---|---|---|---|---|---|---|---|
| Transparenz | | | [%] | 59 | 91 | 91 | 91 | 59 |
| Trübung | | | [%] | - | 9 | 1,7 | 9 | - |
| Reißfestigkeit | | längs | [N/mm$^2$] | 200 | 310 | 250 | 310 | 205 |
| | | quer | [N/mm$^2$] | 230 | 250 | 260 | 250 | 230 |
| Reißdehnung | | längs | [%] | 200 | 80 | 110 | 85 | 210 |
| | | quer | [%] | 130 | 100 | 100 | 100 | 130 |
| E-Modul | | längs | [N/mm$^2$] | 3900 | 5100 | 4200 | 5100 | 4000 |
| | | quer | [N/mm$^2$] | 4300 | 4300 | 5000 | 4250 | 4350 |
| Oberflächendefekte | | | | keine | keine | keine | keine | keine |
| Dauerwärmebeständigkeit | | | | gut | gut | gut | gut | gut |
| Rohstoffkreislauf geschlossen | | | | ja | ja | ja | ja | nein |
| Homogenität der Polymerschmelze | | | | gut | gut | gut | ausreichend | gut |

**Patentansprüche**

1. Verfahren zur Herstellung einer ein- oder mehrschichtigen Folie auf Basis kristallisierbarer Thermoplasten, deren Hauptbestandteil ein kristallisierbarer Thermoplast mit einer Standardviskosität SV (Dichloressigsäure, DCE) von 600 bis 1.000 ist, durch Extrudieren oder Coextrudieren, biaxiales Orientieren und Thermofixieren, **dadurch gekennzeichnet, daß** der Thermoplast ein kristallisierbarer Polyester ist, der vor der Extrusion oder Coextrusion vermischt wird mit einer Mischung aus

   - bei der Folienherstellung immanent anfallendem Regenerat und
   - bis zu weniger als 50 Gew.-%, bezogen auf das Gesamtgewicht aller Thermoplasten, eines Sekundär-Thermoplasten mit einer Standardviskosität SV (DCE) von mehr als 900 bis 1.500, der ebenfalls ein kristallisierbarer Polyester ist,

   unter der Maßgabe, daß sich die Standardviskosität SV (DCE) des als Hauptbestandteil verwendeten Thermoplasten von dem des Sekundär-Thermoplasten um mindestens 100 Einheiten unterscheidet, wobei so viel von dem Sekundär-Thermoplasten zugegeben wird, daß die rechnerisch ermittelte Standardviskosität SV (DCE) der Mischung aus dem immanent anfallenden Regenerat und dem Sekundär-Thermoplasten praktisch gleich der des als Hauptbestandteil eingesetzten Thermoplasten ist, wobei die Standard-Viskosität SV (DCE) an einer 1 gew.-%igen Lösung in Dichloressigsäure (DCE) bei 25 °C gemessen wird.

2. Verfahren gemäß Anspruch 1, **dadurch gekennzeichnet, daß** der als Hauptbestandteil verwendete kristallisierbare Thermoplast eine Standardviskosität SV (DCE) von 700 bis 900 aufweist.

3. Verfahren gemäß Anspruch 1 oder 2, **dadurch gekennzeichnet, daß** der Sekundär-Thermoplast eine Standardviskosität SV (DCE) von 1.000 bis 1.400, bevorzugt von 1.050 bis 1.300, aufweist.

4. Verfahren gemäß einem oder mehreren der Ansprüche 1 bis 3, **dadurch gekennzeichnet, daß** der Anteil des Sekundär-Thermoplasten 5 bis 45 Gew.-%, bevorzugt 10 bis 40 Gew.-%, jeweils bezogen auf das Gesamtgewicht aller kristallisierbaren Thermoplasten, beträgt.

5. Verfahren gemäß einem oder mehreren der Ansprüche 1 bis 4, **dadurch gekennzeichnet, daß** die kristallisierbaren Thermoplasten Polyester oder Copolyester sind.

6. Verfahren gemäß Anspruch 5, **dadurch gekennzeichnet, daß** der Sekundär-Thermoplast weniger als 10 Gew.-% Copolyester umfaßt.

7.  Verfahren gemäß Anspruch 5, **dadurch gekennzeichnet, daß** der Polyester ein Polykondensat aus einer aromatischen Dicarbonsäure, bevorzugt Terephthalsäure, Isophthalsäure und/oder Naphthalin-2,6-dicarbonsäure, und einem aliphatischen Diol mit 2 bis 10 Kohlenstoffatomen, bevorzugt Ethylenglykol, ist.

8.  Verfahren gemäß Anspruch 1, **dadurch gekennzeichnet, daß** das bei der Folienherstellung immanent anfallende Regenerat über einen Regeneratkreislauf in die Produktion zurückgeführt wird.

9.  Verfahren gemäß Anspruch 1, **dadurch gekennzeichnet, daß** das bei der Folienherstellung immanent anfallende Regenerat mit dem Sekundär-Thermoplasten vermischt über den Regeneratkreislauf zugegeben wird.

10. Verfahren gemäß einem oder mehreren der Ansprüche 1 bis 9, **dadurch gekennzeichnet, daß** die Folie nach dem Orientieren und Thermofixieren eine Dicke von 0,9 bis 500 $\mu$m, bevorzugt 5 bis 350 $\mu$m, besonders bevorzugt 10 bis 300 $\mu$m, aufweist.

11. Verfahren gemäß einem oder mehreren der Ansprüche 1 bis 10, **dadurch gekennzeichnet, daß** die Folie durch Zugabe von Additiven UV-stabilisiert, flammhemmend ausgerüstet, siegelfähig, ein- oder beidseitig beschichtet, hydrolysestabilisiert, mit Antioxidantien ausgerüstet, chemisch vorbehandelt, coronabehandelt und/oder flammbehandelt ist.

12. Verfahren gemäß Anspruch 1 bis 11, **dadurch gekennzeichnet, daß** darin als Sekundär-Thermoplast ein kristallisierbarer Thermoplast mit einer Standardviskosität SV (DCE) von mehr als 900 bis 1.500 eingesetzt wird, der aus der Produktion von Kunststoffflaschen oder aus recycelten Kunststoffflaschen stammt.

## Claims

1.  A process for producing a single-layer or multilayer film based on crystallizable thermoplastics whose principal constituent is a crystallizable thermoplastic having a standard viscosity SV (dichloroacetic acid, DCA) of from 600 to 1 000, by extrusion or coextrusion, biaxial orientation, and heat setting, which comprises the thermoplastic being a crystallizable polyester which is mixed, prior to extrusion or coextrusion, with a mixture consisting of

    - regrind arising during film production and
    - up to less than 50 % by weight, based on the total weight of all thermoplastics, of a secondary thermoplastic having a standard viscosity SV (DCA) of more than 900 to 1 500, which is likewise a crystallizable polyester,

    with the proviso that the standard viscosity SV (DCA) of the thermoplastic used as principal constituent differs from that of the secondary thermoplastic by at least 100 units, the amount added of the secondary thermoplastic being such that the arithmetically determined standard viscosity SV (DCA) of the mixture of the production regrind and the secondary thermoplastic is virtually the same as that of the thermoplastic used as principal constituent, the standard viscosity SV (DCA) being measured on a 1 % strength by weight solution in dichloroacetic acid (DCA) at 25 °C.

2.  The process as claimed in claim 1, wherein the crystallizable thermoplastic used as principal constituent has a standard viscosity SV (DCA) of from 700 to 900.

3.  The process as claimed in claim 1 or 2, wherein the secondary thermoplastic has a standard viscosity SV (DCA) of from 1 000 to 1 400, preferably from 1 050 to 1 300.

4.  The process as claimed in one or more of claims 1 to 3, wherein the fraction of the secondary thermoplastic is from 5 to 45 % by weight, preferably from 10 to 40 % by weight, based in each case on the total weight of all crystallizable thermoplastics.

5.  The process as claimed in one or more of claims 1 to 4, wherein the crystallizable thermoplastics are polyesters or copolyesters.

6.  The process as claimed in claim 5, wherein the secondary thermoplastic contains less than 10 % by weight of copolyesters.

7. The process as claimed in claim 5, wherein the polyester is a polycondensate of an aromatic dicarboxylic acid, preferably terephthalic acid, isophthalic acid and/or naphthalene-2,6-dicarboxylic acid, and an aliphatic diol having from 2 to 10 carbon atoms, preferably ethylene glycol.

8. The process as claimed in claim 1, wherein the regrind arising during film production is recycled to the production stage via a regrind circuit.

9. The process as claimed in claim 1, wherein the regrind arising during film production, mixed with the secondary thermoplastic, is added via the regrind circuit.

10. The process as claimed in one or more of claims 1 to 9, wherein after orientation and heat setting the film has a thickness of from 0.9 to 500 $\mu$m, preferably from 5 to 350 $\mu$m, more preferably from 10 to 300 $\mu$m.

11. The process as claimed in one or more of claims 1 to 10, wherein the film is UV-stabilized by addition of additives, made flame retardant, sealable, coated on one or both sides, stabilized with respect to hydrolysis, treated with antioxidants, chemically pretreated, corona-treated and/or flame-treated.

12. The process as claimed in claim 1 to 11, wherein, as secondary thermoplastic, use is made of a crystallizable thermoplastic which has a standard viscosity SV (DCA) of more than 900 to 1 500 and which originates from the production of plastic bottles or from recycled plastic bottles.

## Revendications

1. Procédé pour fabriquer un film monocouche ou multicouche à base de thermoplastiques cristallisables, dont le composant principal est un thermoplastique cristallisable avec une viscosité standard SV (acide dichloracétique, DCE) de 600 à 1.000, par extrusion ou coextrusion, orientation biaxiale et thermofixation, **caractérisé en ce que** le thermoplastique est un polyester cristallisable, qui est mélangé avant l'extrusion et la coextrusion avec un mélange constitué de

   - régénéré se formant de façon immanente lors de la fabrication du film et
   - jusqu'à moins de 50 % en poids par rapport au poids total de tous les thermoplastiques, d'un thermoplastique secondaire avec une viscosité standard SV (DCE) de plus de 900 jusqu'à 1.500, qui est également un polyester cristallisable,
   - à la condition que la viscosité standard SV (DCE) du thermoplastique utilisé comme composant principal se différencie de celle du thermoplastique secondaire d'au moins 100 unités, une quantité suffisante du thermoplastique secondaire étant ajoutée pour que la viscosité standard SV (DCE) déterminée de façon mathématique, du mélange du régénéré se formant de façon immanente et du thermoplastique secondaire soit pratiquement identique à celle du thermoplastique utilisé comme composant principal, sachant que la viscosité standard SV (DCE) est mesurée sur une solution concentrée à 1 % en poids dans de l'acide dichloracétique (DCE) à 25°C.

2. Procédé selon la revendication 1, **caractérisé en ce que** le thermoplastique cristallisable, utilisé comme composant principal, présente une viscosité standard SV (DCE) de 700 à 900.

3. Procédé selon la revendication 1 ou 2, **caractérisé en ce que** le thermoplastique secondaire présente une viscosité standard SV (DCE) de 1.000 à 1.400, de préférence de 1.050 à 1.300.

4. Procédé selon une ou plusieurs des revendications 1 à 3, **caractérisé en ce que** la fraction du thermoplastique secondaire représente 5 à 45 % en poids, de préférence 10 à 40 % en poids, à chaque fois par rapport au poids total de tous les thermoplastiques cristallisables.

5. Procédé selon une ou plusieurs des revendications 1 à 4, **caractérisé en ce que** les thermoplastiques cristallisables sont des polyesters ou des copolyesters.

6. Procédé selon la revendication 5, **caractérisé en ce que** le thermoplastique secondaire comprend moins de 10 % en poids de copolyester.

7. Procédé selon la revendication 5, **caractérisé en ce que** le polyester est un polycondensat à base d'un acide dicarboxylique aromatique, de préférence de l'acide téréphtalique, de l'acide isophtalique et/ou de l'acide dicarboxylique-2,6-naphtaline, et d'un diol aliphatique avec 2 à 10 atomes de carbone, de préférence de l'éthylèneglycol.

8. Procédé selon la revendication 1, **caractérisé en ce que** le régénéré se formant de façon immanente lors de la fabrication du film est recyclé par un circuit de régénéré dans la production.

9. Procédé selon la revendication 1, **caractérisé en ce que** le régénéré se formant de façon immanente lors de la fabrication du film est mélangé avec le thermoplastique secondaire et ajouté par le circuit de régénéré.

10. Procédé selon une ou plusieurs des revendications 1 à 9, **caractérisé en ce que** le film présente après l'orientation et la thermofixation une épaisseur de 0,9 à 500 $\mu$m, de préférence 5 à 350 $\mu$m, avec une préférence particulière de 10 à 300 $\mu$m.

11. Procédé selon une ou plusieurs des revendications 1 à 10, **caractérisé en ce que**, par l'ajout d'additifs, le film est stabilisé au niveau des UV, équipé de façon ignifuge, apte au scellement, recouvert sur un côté ou sur les deux côtés, stabilisé à l'hydrolyse, doté d'antioxydants, prétraité chimiquement, traité au niveau de l'effet corona et/ou traité au niveau de la flamme.

12. Procédé selon les revendications 1 à 11, **caractérisé en ce qu'**on utilise, comme thermoplastique secondaire, un thermoplastique cristallisable avec une viscosité standard SV (DCE) supérieure à 900 jusqu'à 1.500, qui provient de la production de bouteilles plastique ou de bouteilles plastique recyclées.

**IN DER BESCHREIBUNG AUFGEFÜHRTE DOKUMENTE**

**In der Beschreibung aufgeführte Patentdokumente**

- EP 0483665 A
- US 5503790 A
- EP 1344790 A

- EP 0044515 A
- EP 0078633 A